# FASCICULE DE BREVET EUROPEEN

(11) **EP 0 762 308 B1**
(45) Date de publication et mention de la délivrance du brevet: **26.11.2003**
(21) Numéro de dépôt: 96401894.9
(22) Date de dépôt: 04.09.1996
(51) Int. Cl.: G06K 7/08

(54) **Installation pour l'échange d'informations à distance entre un objet portatif passif et une station, objet et station correspondants**
Anlage zum Fernaustausch von Informationen zwischen einem tragbaren passiven Objekt und einer Station, entsprechendes Objekt und Station
Arrangement for remote information exchange between a passive portable object and a station, corresponding object and station

(30) Priorité: 06.09.1995 FR 9510445
(43) Date de publication de la demande: 12.03.1997
(73) Titulaire: FRANCE TELECOM, 75015 Paris (FR); LA POSTE, 92777 Boulogne Billancourt Cédex (FR)
(72) Inventeur: Thorigne, Yves, 14790 Verson (FR)
(74) Mandataire: Plaçais, Jean-Yves

(56) Documents cités:
- EP-A- 0 309 201
- WO-A-92/09175
- WO-A-92/17866
- WO-A-94/11842
- FR-A- 2 707 783
- FR-A- 2 711 440
- US-A- 4 658 263
- US-A- 4 924 171

## Description

La présente invention concerne l'échange d'informations à distance entre un objet portatif passif et une station.

D'une manière générale, on entend ici, par objet portatif, une carte à mémoire sans contact ou analogue, destinée à toute application dévolue aux cartes à mémoire sans contact, ou encore une étiquette électronique destinée par exemple au suivi automatisé d'objets tels que des colis. L'objet portatif est dit "actif" lorsqu'il comprend une source d'énergie interne (pile ou batterie) qui alimente les différents éléments constitutifs de l'objet portatif. Il est dit "passif" lorsqu'il ne contient pas de source d'alimentation interne.

Dans la Demande de Brevet français FR-A-2 711 440 déposée par le Demandeur le 18 octobre 1993, un objet portatif actif échange des informations avec une station distante par couplage électromagnétique.

La transmission des informations de l'objet portatif vers la station est provoquée par les commutations d'un circuit électronique de l'objet portatif qui font varier la phase entre une tension alternative de référence et une tension alternative aux bornes de l'élément inductif (ou antenne) de la station, lors du couplage inductif de ladite antenne-station avec l'élément inductif (ou antenne) de l'objet portatif.

Dans l'autre sens, la transmission des informations de la station vers l'objet portatif est provoquée par les commutations du circuit électronique de l'objet portatif engendrées lorsqu'une tension alternative est induite dans l'élément inductif de l'objet portatif par application d'un signal alternatif dans l'élément inductif de la station.

En pratique, lors de la phase de dialogue, la distance entre la station et l'objet portatif varie de 1 à 10 cm.

Le Demandeur s'est posé le problème de supprimer la source d'énergie interne de l'objet portatif afin de le rendre autonome.

On connaît déjà des installations dans lesquelles le même signal alternatif et la même antenne servent pour les échanges d'informations et le transfert de l'énergie.

Toutefois, la mise en oeuvre de la transmission de données dans le sens station vers objet portatif nécessite la mise en place d'une modulation complexe, modulation de phase par exemple, ce qui requiert une électronique de démodulation sophistiquée sur l'objet portatif. De même, l'électronique qui doit assurer en permanence la fonction de récupération d'horloge et de transfert d'énergie sur l'objet portatif, ne peut utiliser une modulation simple telle que la modulation en tout ou rien. De plus, lorsque plusieurs stations sont proches les unes des autres, des parasites radio-électriques peuvent perturber les protocoles d'échange.

Par ailleurs, Le demandeur a observé que dans les stations à deux antennes de l'état de la technique (EP-A-0 309 201, FR-A-2 707 783) l'antenne émettant le signal de télé-alimentation (ici le second élément inductif-station) est susceptible de perturber l'antenne dédiée à la transmission de données (ici le premier élément inductif-station).

La présente invention apporte une solution à ces problèmes.

Elle porte sur une installation dans laquelle la station comprend :
- un premier générateur d'une première tension alternative ayant une première fréquence choisie,
- un premier élément résistif-station possédant une première borne reliée au premier générateur et une seconde borne,
- un arrangement en série relié à la seconde borne et possédant au moins un premier élément inductif-station, un premier élément capacitif-station et un second élément résistif-station, ledit arrangement étant susceptible d'engendrer à ses bornes une seconde tension alternative,
- des moyens de traitement-station reliés aux première et seconde bornes du premier élément résistif-station et capables de traiter les variations de phase entre les première et seconde tensions alternatives, et
dans laquelle l'objet portatif comprend:
- un circuit électronique comprenant un premier élément inductif-objet et un premier élément capacitif-objet, ledit circuit étant commutable entre un état inactif et un état actif dans lequel il forme un circuit résonant avec le premier élément inductif-station;
- des moyens de traitement-objet capables de commuter le circuit électronique en fonction d'informations à transmettre vers la station, la variation de phase entre les première et seconde tensions alternatives induite par ces commutations permettant aux moyens de traitement-station d'en déduire lesdites informations ainsi transmises vers la station.

Selon une définition générale de l'invention, la station comprend en outre:
- un second générateur d'un troisième signal alternatif ayant une seconde fréquence choisie, différente de la première fréquence,
- un second élément inductif-station relié au second générateur, indépendant du premier élément inductif-station et propre à créer un champ magnétique prédéterminé, et
l'objet portatif comprend en outre:
- un second élément inductif-objet indépendant du premier élément inductif-objet, et
- un second élément capacitif-objet relié aux bornes du second élément inductif-objet, ledit second élément inductif-objet étant susceptible de former une boucle accordée avec le second élément inductif-station pour engendrer aux bornes dudit second élément inductif-objet une tension d'alimentation alternative induite en présence du champ magnétique créé par le second élément inductif-station,
la station comprend en outre un circuit de filtrage, de type dipôle, intercalé entre l'une des armatures du premier élément capacitif-station et l'une des bornes du premier élément inductif-station, ledit circuit de filtrage étant propre à se comporter comme une inductance à la première fréquence et comme une impédance de forte valeur à la seconde fréquence.

Ainsi, l'installation selon l'invention supprime la source d'énergie interne de l'objet portatif et engendre une tension d'alimentation ayant une énergie appropriée à l'alimentation des éléments constitutifs de l'objet portatif. Elle permet aussi une mise en oeuvre plus facile des fonctions de transfert d'énergie et de données, ainsi qu'une meilleure immunité contre les perturbations entre stations proches, par rapport aux installations utilisant un même signal alternatif et une même antenne pour les échanges d'informations et le transfert d'énergie. De plus, le circuit de filtrage de la station permet d'annuler la perturbation de l'antenne de télé-alimentation sur l'antenne dédiée à la transmission de données, par rapport aux stations à deux antennes de l'état de la technique.

En pratique, le circuit de filtrage comprend un élément inductif et un élément capacitif, montés en parallèle, et disposés entre les premiers éléments capacitif et inductif de la station.

Selon une autre caractéristique de l'invention, les premier et second éléments inductifs-station ont sensiblement les mêmes dimensions géométriques et sont superposés l'un sur l'autre.

Une telle disposition a l'avantage d'être facile à mettre en oeuvre par rapport à une juxtaposition particulière d'une antenne sur une autre.

De plus, grâce à une telle disposition des antennes de la station, il n'est pas nécessaire d'appliquer l'objet portatif selon une relation géométrique particulière par rapport à ladite station. Il suffit seulement selon l'invention d'appliquer l'objet portatif à proximité des antennes de la station.

Selon un autre mode de réalisation préféré de l'invention, l'objet portatif comprend en outre des moyens de récupération d'horloge reliés aux bornes du second élément inductif-objet et propres à récupérer un signal d'horloge à partir de la tension d'alimentation alternative induite, ledit signal d'horloge étant destiné au cadencement des éléments, de type logique ou de type mémoire, constitutifs de l'objet portatif passif. Avantageusement, cette récupération d'horloge permet la suppression de tout dispositif horloge interne, par exemple à quartz, sur l'objet portatif.

En pratique, l'objet portatif comprend en outre des moyens de redressement reliés aux bornes du second élément inductif-objet et propres à redresser la tension d'alimentation alternative induite en une tension d'alimentation continue destinée à l'alimentation des moyens de traitement-objet.

De préférence, l'objet portatif comprend en outre un circuit de régulation d'énergie relié à la sortie des moyens de redressement et propre à réguler la tension d'alimentation continue induite en fonction de la distance entre la station et l'objet portatif.

La présente invention a également pour objet une station et un objet portatif appartenant à une telle installation.

D'autres caractéristiques et avantages de l'invention apparaîtront à la lumière de la description détaillée ci-après, et dessins annexés dans lesquels :
- la figure 1 représente schématiquement une installation d'échange d'informations associée au contrôle d'accès selon l'art antérieur;
- la figure 2 représente schématiquement l'installation d'échange d'informations entre un objet portatif actif et une station selon l'art antérieur;
- la figure 3 est une représentation schématique des éléments constitutifs du système de transfert d'énergie par induction, côté station, selon l'invention;
- la figure 4 représente schématiquement le bloc dédié à la transmission de données au niveau de la station décrit en référence à la figure 2 et modifié selon l'invention;
- la figure 5 est une représentation schématique des moyens essentiels et constitutifs de l'objet portatif selon l'invention; et
- la figure 6 est une représentation schématique des deux antennes de l'objet portatif selon l'invention.

Les dessins comportent pour l'essentiel des éléments de caractère certain. A ce titre, ils font partie intégrante de la description et pourront non seulement servir à mieux faire comprendre la description ci-après, mais aussi à contribuer, le cas échéant, à la définition même de l'invention.

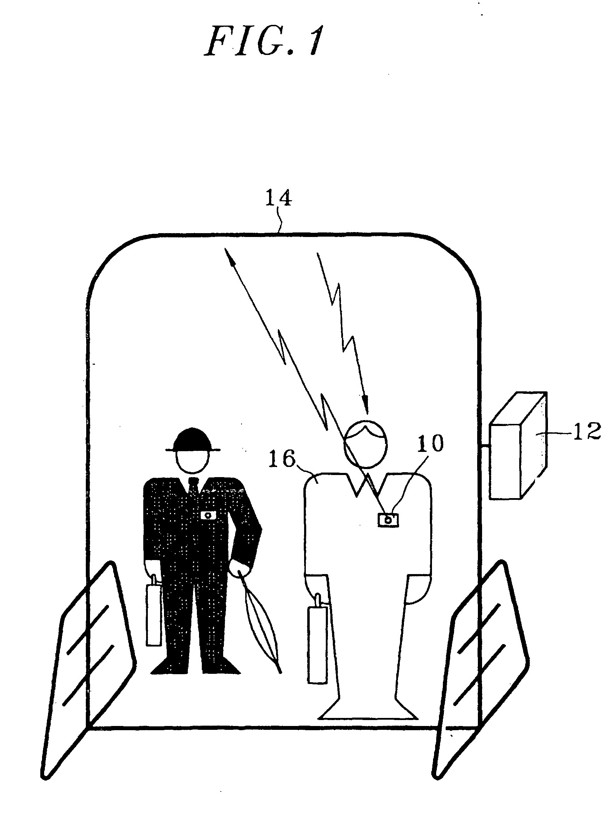

Selon la figure 1, dans une application particulière de l'invention, aucunement limitative, l'objet portatif 10 est du type carte à mémoire, et la station est un terminal 12 équipé d'un portique inductif 14 dans lequel est susceptible de passer une personne 16 munie de la carte à mémoire 10.

Par exemple, la station est un ensemble électronique contenu dans un boîtier de dimensions choisies. Par exemple, les dimensions sont de 40 cm x 16 cm, avec une épaisseur de 4 cm.

Par exemple, l'objet portatif est un dispositif dont les dimensions sont 8,5 cm x 5,4 cm, avec une épaisseur de 0,5 cm. L'objet portatif est destiné à être présenté devant la station. Cet objet portatif peut atteindre une vitesse de 1 m/s. Lors de la phase de dialogue, la distance entre la station et l'objet portatif peut varier de 1 à 10 cm.

L'opération réalisée à chaque passage permet la lecture par la station d'une zone mémoire contenue dans l'objet portatif, puis l'inscription, dans cette même zone mémoire, d'une nouvelle information envoyée par la station.

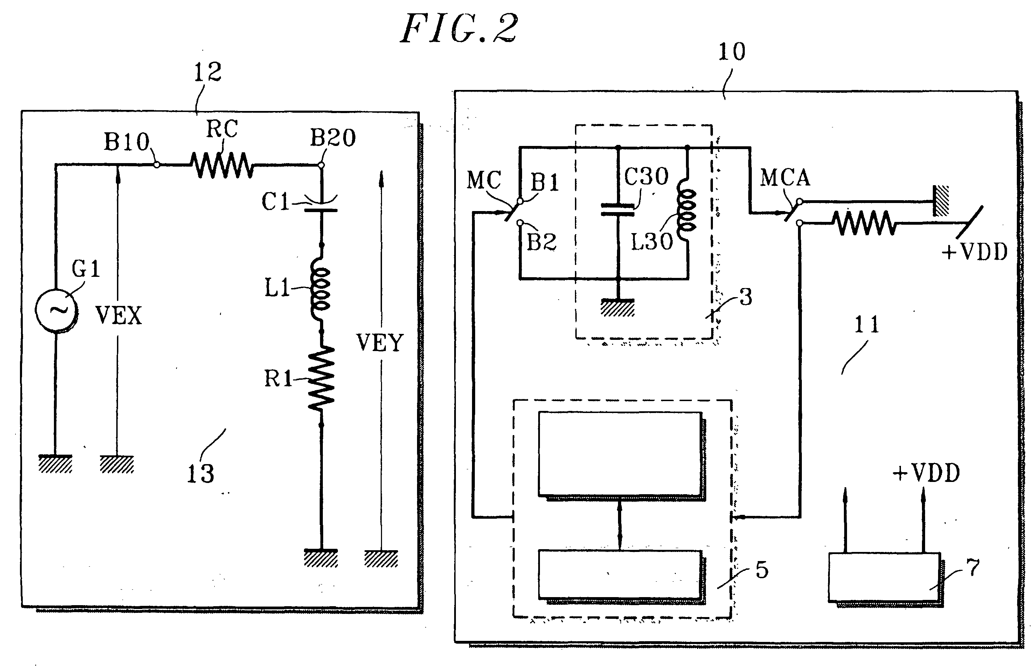

Sur la figure 2, on retrouve, au moins en partie, l'installation pour l'échange d'informations par couplage électromagnétique entre un objet portatif et une station telle que décrite dans la Demande de Brevet FR-A-2 711 440 susmentionnée.

D'une manière générale, la station 12 comprend un bloc 13 dédié à la transmission de données.

Un tel bloc est décrit en détail dans la Demande de Brevet susmentionnée dont le contenu fait partie intégrante de la présente description, à toutes fins utiles.

Pour l'essentiel, le bloc 13 comprend:
- un premier générateur G1 d'une première tension alternative VEX ayant une première fréquence choisie F1,
- un premier élément résistif-station RC possédant une première borne B10 reliée au premier générateur G1 et une seconde borne B20,
- un arrangement en série relié à la seconde borne B20 et. possédant au moins un premier élément inductif-station L1, un premier élément capacitif-station C1 et un second élément résistif-station R1, ledit arrangement étant susceptible d'engendrer à ses bornes une seconde tension alternative VEY,
- des moyens de traitement-station (non représentés) reliés aux première et seconde bornes du premier élément résistif-station RC et capables de traiter les variations de phase entre les première et seconde tensions alternatives.

De son côté, l'objet portatif 10 comprend un bloc 11 dédié à la transmission de données.

Ce bloc 11, décrit en détail dans la Demande de Brevet susmentionnée, comprend, pour l'essentiel:
- un circuit électronique commutable 3 entre un état inactif et un état actif dans lequel il forme un circuit résonant avec le premier élément inductif-station L1, et
- des moyens de traitement-objet 5 capables de commuter le circuit électronique 3 en fonction d'informations à transmettre vers la station, la variation de phase entre les première et seconde tensions alternatives induite par ces commutations permettant aux moyens de traitement-station d'en déduire lesdites informations.

Le circuit électronique 3 comprend un élément inductif L30 et un élément capacitif C30.

Dans la réalisation choisie, l'antenne L30 a une valeur de 9 µH répartie sur 8 spires et la capacité C30 a une valeur de 61 pF.

La transmission des informations de l'objet portatif 10 vers la station 12 est provoquée par les commutations du circuit électronique 3 de l'objet portatif (par l'action des moyens de commutions MC) qui font varier la phase entre la tension alternative de référence VEX et la tension alternative VEY aux bornes de l'arrangement en série L1, C1 et R1 de la station, lors du couplage inductif de ladite antenne-station L1 avec l'élément inductif (ou antenne) L30 de l'objet portatif.

Dans l'autre sens, la transmission des informations de la station vers l'objet portatif est provoquée par les commutations du circuit électronique de l'objet portatif (par l'action des moyens de commutations MCA) engendrées lorsqu'une tension alternative est induite dans l'élément inductif L30 de l'objet portatif par application d'un signal alternatif dans l'élément inductif L1 de la station.

Par exemple, le générateur G1 délivre une tension alternative VEX, de 1,5 Volt crête et ayant une fréquence F1 égale à 6,78 MHz.

Une source d'alimentation interne 7 délivre une tension d'alimentation continue +VDD pour alimenter les éléments constitutifs du bloc 11.

Selon l'invention, la source d'alimentation interne de l'objet portatif qui alimente les éléments constitutifs du bloc 11 est supprimée grâce à l'adjonction d'un système de transfert d'énergie par induction à deux antennes indépendantes de celles dédiées à la transmission de données.

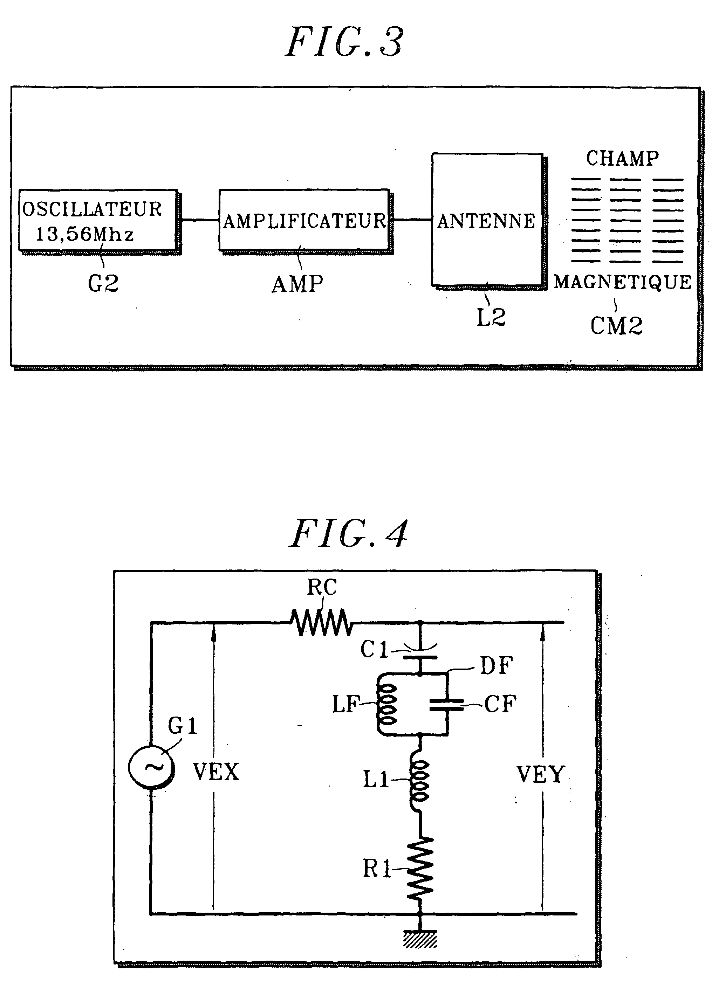

Selon la figure 3, le système de transfert d'énergie par induction est fondé sur la génération d'un signal alternatif d'alimentation par un second générateur (G2) disposé sur la station.

En pratique, le second générateur G2 est un oscillateur susceptible de délivrer un signal alternatif d'une fréquence F2, différente de la première fréquence F1 dédiée à la transmission de données, et par exemple égale à 13,56 MHz.

Un second élément inductif-station (ou antenne) L2 est relié au second générateur G2 à travers des moyens amplificateurs AMP.

L'antenne L2 est indépendante de l'antenne L1. Elle crée un champ magnétique CM2 lorsqu'elle est traversée par le signal de fréquence F2.

Les deux fréquences F1 et F2 sont différentes l'une de l'autre, de façon à permettre l'annulation des interférences radio-électriques du système assurant le transfert d'énergie sur le système assurant les échanges d'informations.

Le choix de la fréquence du signal radio-électrique assurant le transfert d'énergie de la station vers l'objet portatif, est approprié de façon à permettre le meilleur rendement de la transmission d'énergie.

Les deux antennes L1 et L2 de la station sont actives, c'est-à-dire qu'elles émettent chacune un champ magnétique. L'intensité du champ CM2 émis par l'antenne L2 assurant le transfert d'énergie est très sensiblement supérieure à l'intensité du champ CM1 émis par l'antenne L1 assurant les échanges d'informations.

Il est à remarquer que dans le cas où plusieurs stations sont proches les unes des autres, les perturbations entre stations se trouvent réduites par rapport aux systèmes sans contact avec télé-alimentation et utilisant une seule fréquence assurant le transfert d'énergie et les échanges d'informations.

D'une manière générale, pour une tension donnée, la puissance de télé-alimentation est maximale pour une valeur d'inductance minimale côté station. L'inductance étant proportionnelle au nombre de spires, celle-ci est minimale pour une antenne L2 constituée d'un nombre minimal de spires. En pratique, l'antenne L2 comprend une seule spire.

Sur la figure 4, il est prévu, selon l'invention, d' adjoindre au bloc 13 décrit en référence à la figure 2, un circuit de filtrage DF susceptible de couper une bande spectrale centrée autour de la seconde fréquence F2 égale à 13,56 MHz. Ce dispositif de filtrage comprend un élément inductif LF et un élément capacitif CF, montés en parallèle entre l'une des armatures du condensateur C1 et l'une des bornes de l'élément inductif-station L1.

Ce dispositif de filtrage DF est un filtre coupe-bande, c'est-à-dire un filtre qui ne transmet pas la fréquence F2 et laisse passer toutes les autres fréquences, notamment la fréquence F1 associée à la transmission des données. Le circuit de filtrage DF se comporte comme une inductance à la fréquence F1 et se comporte comme une impédance de valeur très grande (par exemple de l'ordre de 20 à 30 kOhms) à la fréquence F2.

Ce type de filtrage est rendu possible par le fait que la station comprend un arrangement L1-C1 en série.

Selon l'invention, les antennes L1 et L2 ont sensiblement les mêmes dimensions géométriques. Elle sont superposées l'une sur l'autre, ce qui rend par conséquent le couplage maximal entre elles.

Dans ces conditions, les dispositions des antennes L1 et L2 doivent alors seulement satisfaire les besoins de l'application, c'est-à-dire doivent permettre le fonctionnement du système dans une zone définie, afin de satisfaire l'ergonomie requise.

Il n'est pas nécessaire d'appliquer l'objet portatif selon une relation géométrique particulière par rapport à la station. Il suffit seulement selon l'invention d'appliquer la carte à proximité des antennes de la station.

En pratique, les dimensions des antennes L1 et L2 correspondent à celles d'un rectangle de longueur égale à 17 cm et de largeur 7 cm. Le système autorise ainsi une zone de fonctionnement dont la surface est légèrement inférieure aux dimensions des antennes de la station.

Par exemple, l'antenne de télé-alimentation L2 est constituée d'une seule spire et l'antenne L1 dédiée à la transmission de données est constituée de l'ordre de trois spires jointives. Le nombre de spires de l'antenne L1 dépend de la tension crête VEX délivrée par le générateur G1 et des caractéristiques du couplage station-carte. La technologie de réalisation de l'antenne L1, en particulier, par la valeur du coefficient de surtension du circuit électronique 3 de l'objet portatif à la fréquence F1, doit être également prise en compte pour la détermination de ce nombre de spires.

Le Demandeur a obtenu des résultats satisfaisants avec les valeurs numériques suivantes:
- élément résistif RC de 50 Ohms,
- élément capacitif C1 de 72 pF,
- élément inductif L1 de 3,1 µH,
- élément inductif L2 de 0,4 µH,
- élément capacitif CF de 42,1 pF,
- élément inductif LF de 3,35 µH,
- élément résistif R1 de 3 Ohms (dont une partie de cet élément résistif correspond à la partie réelle de l'impédance de l'antenne L1).

Par ailleurs, l'élément inductif LF associé par un montage en parallèle à l'élément capacitif CF présente une impédance équivalente à une inductance égale à 4,46 µH à la fréquence F1.

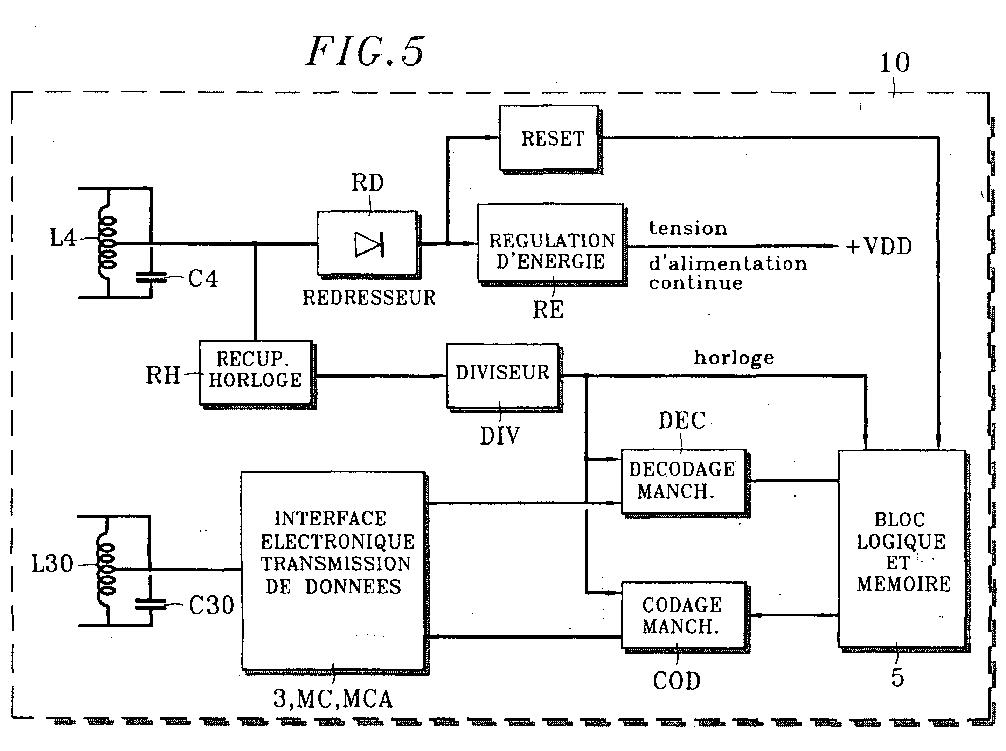

Sur la figure 5, on a représenté les moyens essentiels et constitutifs de l'objet portatif. On retrouve le système dédié à la transmission de données décrit en référence à la figure 2. Il est complété selon l'invention par une antenne L4 destinée à être couplé électromagnétiquement à l'antenne L2 de la station.

Un condensateur d'accord C4 à la fréquence F2 est également prévu pour former une boucle accordée avec l'élément inductif-station L2. Une telle boucle engendre aux bornes de l'antenne L4 une tension d'alimentation alternative induite en présence du champ magnétique créé par l'élément inductif-station L2.

Des moyens de redressement RD, par exemple de type double alternance, sont reliés aux bornes de l'antenne L4 pour redresser la tension d'alimentation alternative induite en une tension d'alimentation continue +VDD destinée à l'alimentation des moyens de traitement-objet.

Avantageusement, un circuit de régulation d'énergie RE est relié à la sortie des moyens de redressement RD pour réguler la tension d'alimentation continue induite en fonction de la distance entre la station et l'objet portatif.

En pratique, le circuit de régulation d'énergie RE comprend un dispositif électronique de type régulation parallèle.

Pour améliorer le rendement de télé-alimentation, il est avantageux d'avoir un nombre de spires n au niveau de l'antenne L4 de l'objet portatif, tel que le rendement du système de télé-alimentation soit maximal, et d'avoir une seule spire au niveau de l'antenne L2 de la station. Il est à remarquer que le nombre de spires est limité par la technologie de l'objet portatif. Afin de réduire le coût de fabrication de l'objet portatif, l'antenne L4 est réalisée sous forme de spires gravées sur un substrat (verre époxy par exemple). Le nombre n de spires est par exemple égal à 4 pour une surface de l'objet portatif de l'ordre de celle décrite ci-avant.

En pratique, l'antenne L4 a une valeur de 4,1 µH et la capacité C4 a une valeur de 33,5 pF.

Par ailleurs, la régulation de la tension +VDD sur l'objet portatif est associée à une régulation du courant parcourant l'antenne L2 de la station. Cette régulation est adaptée de façon à ce que la tension présente aux bornes de l'antenne L2 est inversement proportionnelle, selon une loi appropriée, à la distance entre ladite station et l'objet portatif. Le but recherché est d'obtenir une réduction de l'intensité du champ magnétique émis par l'antenne L2 lorsque l'objet portatif se rapproche de l'antenne L2 de la station. La solution est obtenue par l'intermédiaire d'une source G2 dédiée à l'alimentation qui se comporte comme un générateur de courant.

Des moyens de récupération d'horloge RH, reliés aux bornes de l'antenne L4, récupèrent un signal d'horloge à partir de la tension d'alimentation alternative induite.

Ce signal d'horloge est destiné au cadencement des éléments 5 de type logique ou de type mémoire constitutifs de l'objet portatif passif.

Avantageusement, cette récupération d'horloge permet la suppression de tout dispositif horloge interne, par exemple à quartz, sur l'objet portatif.

Il est à remarquer que l'objet portatif comprend en outre des moyens diviseurs DIV reliés à la sortie des moyens de récupérations RH et propres à diviser la fréquence du signal d'horloge ainsi récupéré en un sous-multiple choisi pour cadencer les moyens de traitement-objet 5.

Une fonction de RESET est disponible pour initialiser correctement les éléments logiques des moyens de traitement-objet 5.

Des moyens de codage COD et de décodage DEC de type MANCHES-TER sont également prévus entre les moyens de traitement-objet 5 et l'interface électronique de transmission de données, décrite en référence à la figure 2, et comprenant le circuit électronique 3 et les moyens de commutations MC et MCA.

Ces moyens de codage et décodage sont cadencés par le signal d'horloge issu des moyens diviseurs.

Les antennes L4 et L30 sont disposées sur l'objet portatif selon une géométrie particulière.

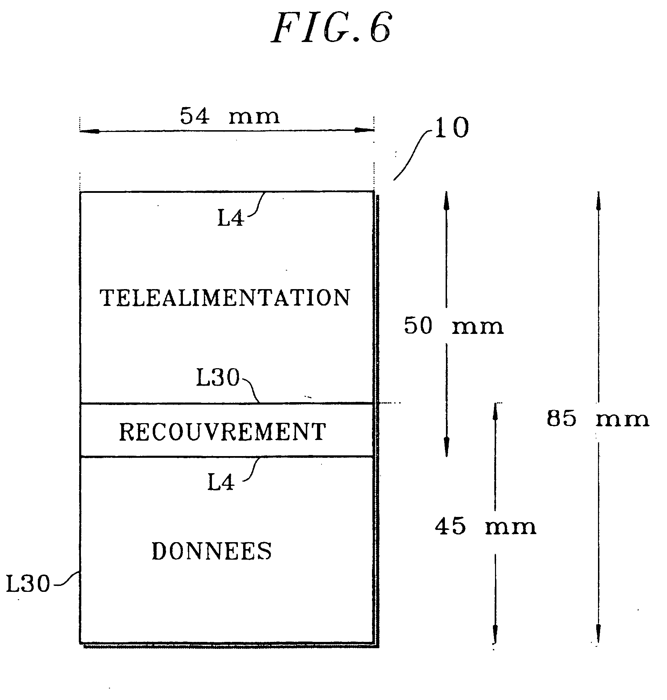

Dans le cas d'un objet portatif (figure 6) de type carte à mémoire de dimensions standards, à savoir 85 mm par 54 mm, l'antenne de télé-alimentation L4 est par exemple un rectangle de 50 mm par 54 mm et l'antenne de transmission de données L30 est par exemple un rectangle de 45 mm par 54 mm. Il y a donc recouvrement de l'antenne L4 sur l'antenne L30 sur 10 mm.

Le Demandeur a observé que le couplage entre ces deux antennes L4 et L30 est perturbateur (c'est-à-dire générateur de perturbations sur le fonctionnement du transfert de données) lorsque le recouvrement est au-delà de 10 mm.

La réalisation matérielle de l'objet portatif, selon l'invention, a permis, par la suppression de la pile (ou de la batterie) et du résonateur à quartz, l'intégration de l'ensemble électronique sur une seule puce silicium, à l'exception de trois composants qui sont de type condensateur miniature pour les éléments C4, C30, et d'un condensateur de lissage de la tension d'alimentation (non représenté).

Il est à remarquer que le fait de disposer de deux signaux indépendants sur l'objet portatif présente l'avantage de séparer, pour la réalisation du système électronique de l'objet portatif, les fonctions de transfert d'énergie et d'horloge d'une part, des fonctions de transfert de données d'autre part.

## Revendications

1. Installation pour l'échange d'informations par couplage électromagnétique entre un objet portatif et une station, dans laquelle ladite station comprend:
- un premier générateur (G1) d'une première tension alternative (VEX) ayant une première fréquence choisie (F1),
- un premier élément résistif-station (RC) possédant une première borne reliée au premier générateur (G1) et une seconde borne,
- un arrangement en série relié à la seconde borne et possédant au moins un premier élément inductif-station (L1) un premier élément capacitif-station (C1) et un second élément résistif-station (R1), ledit arrangement étant susceptible d'engendrer à ses bornes une seconde tension alternative (VEY),
- des moyens de traitement-station reliés aux première et seconde bornes du premier élément résistif-station (RC) et capables de traiter les variations de phase entre les première et seconde tensions alternatives, et
dans laquelle ledit objet portatif comprend:
- un circuit électronique (3) comprenant un premier élément inductif-objet (L30) et un premier élément capacitif-objet (C30), ledit circuit (3) étant commutable entre un état inactif et un état actif dans lequel il forme un circuit résonant avec le premier élément inductif-station (L1),
- des moyens de traitement-objet (5) capables de commuter le circuit électronique (3) en fonction d'informations à transmettre vers la station, la variation de phase entre les première et seconde tensions alternatives induite par ces commutations permettant aux moyens de traitement-station d'en déduire lesdites informations,
ladite installation étant **caractérisée en ce qu'**elle comprend en outre sur la station:
- un second générateur (G2) d'un troisième signal alternatif d'une seconde fréquence choisie (F2), différente de la première fréquence (F1),
- un second élément inductif-station (L2) relié au second générateur (G2), indépendant du premier élément inductif-station (L1), et propre à créer un champ magnétique (CM2) prédéterminé, et
**en ce qu'**elle comprend en outre sur l'objet portatif:
- un second élément inductif-objet (L4) indépendant du premier élément inductif-objet (L30),
- un second élément capacitif-objet (C4) relié aux bornes du second élément inductif-objet (L4), ledit second élément inductif-objet (L4) étant susceptible de former une boucle accordée avec le second élément inductif-station (L2) pour engendrer aux bornes dudit second élément inductif-objet (L4) une tension d'alimentation alternative induite en présence du champ magnétique (CM2) créé par le second élément inductif-station (L2), et
**en ce que** la station comprend en outre un circuit de filtrage (DF), de type dipôle, intercalé entre l'une des armatures du premier élément capacitif-station (C1) et l'une des bornes du premier élément inductif-station (L1), ledit circuit de filtrage étant propre à se comporter comme une inductance à la première fréquence (F1) et comme une impédance de forte valeur à la seconde fréquence (F2).

2. Dispositif selon la revendication 1, **caractérisé en ce que** le circuit de filtrage (DF) comprend un élément inductif (LF) et un élément capacitif (CF), montés en parallèle, et disposés entre les premiers éléments capacitif et inductif (C1 et L1) de la station.

3. Installation selon la revendication 1 ou la revendication 2, **caractérisée en ce que** les premier et second éléments inductifs-station (L1 et L2) ont sensiblement les mêmes dimensions géométriques et sont superposés l'un sur l'autre.

4. Installation selon l'une des revendications précédentes, **caractérisée en ce que** le second élément inductif-station (L2) comprend une spire.

5. Installation selon la revendication 4, **caractérisée en ce que** le premier élément inductif-station (L1) comprend de l'ordre de trois spires jointives.

6. Installation selon l'une des revendications précédentes, **caractérisée en ce que** l'objet portatif comprend en outre des moyens de redressement (DR) reliés aux bornes du second élément inductif-objet (L4) et propres à redresser la tension d'alimentation alternative induite en une tension d'alimentation continue destinée à l'alimentation des moyens de traitement-objet (5).

7. Installation selon la revendication 6, **caractérisée en ce que** l'objet portatif comprend en outre un circuit de régulation d'énergie (RE) relié à la sortie des moyens de redressement (RD) et propres à réguler la tension d'alimentation continue induite en fonction de la distance entre la station et l'objet portatif.

8. Installation selon l'une des revendications précédentes, **caractérisée en ce que** le second générateur (G2) est un générateur de courant.

9. Installation selon la revendication 1, **caractérisée en ce que** l'objet portatif comprend en outre des moyens de récupération d'horloge (RH) reliés aux bornes du second élément inductif-objet (L4) et propres à récupérer un signal d'horloge à partir de la tension d'alimentation alternative induite.

10. Installation selon la revendication 7, **caractérisé en ce que** l'objet portatif comprend en outre des moyens diviseurs (DIV) reliés à la sortie des moyens de récupération et propres à diviser la fréquence du signal d'horloge ainsi récupéré en un sous multiple choisi pour cadencer les moyens de traitement-objet.

11. Installation selon la revendication 1, **caractérisé en ce que** la station comprend en outre des moyens amplificateurs (AMP) propres à amplifier le troisième signal alternatif d'alimentation, issu du second générateur (G2).

12. Installation selon l'une des revendications précédentes, **caractérisée en ce que** le second élément inductif-objet (L4) comprend n spires, avec n nombre entier de l'ordre de 4.

13. Installation selon l'une des revendications précédentes, **caractérisée en ce que** les premier et second éléments inductifs-objets (L30 et L4) sont disposés l'un par rapport à l'autre selon une relation géométrique prédéterminée, destinée à limiter les perturbations radio-électriques.

14. Installation selon l'une des revendications précédentes, **caractérisée en ce que** l'objet portatif est du type carte à mémoire sans contact passive ou analogue.

15. Installation selon l'une des revendications 1 à 13, **caractérisée en ce que** l'objet portatif est du type étiquette électronique ou analogue.

16. Station selon l'une des revendications 1 à 15.

## Patentansprüche

1. Anlage zum Datenaustausch durch elektromagnetische Kopplung zwischen einem tragbaren Gegenstand und einer Station, wobei die Station Folgendes umfasst:
- einen ersten Generator (G1) für eine erste Wechselspannung (VEX) mit einer ersten ausgewählten Frequenz (F1),
- ein erstes stationsseitiges Widerstandselement (RC), das eine erste Klemme, die an den ersten Generator (G1) angeschlossen ist, und eine zweite Klemme besitzt,
- eine Reihenanordnung, die an die zweite Klemme angeschlossen ist und mindestens ein erstes stationsseitiges induktives Element (L1), ein erstes stationsseitiges Kondensatorelement (C1) und ein zweites stationsseitiges Widerstandselement (R1) besitzt, wobei die Anordnung an ihren Klemmen eine zweite Wechselspannung (VEY) erzeugen kann,
- stationsseitige Verarbeitungseinrichtung(en), die an die erste und die zweite Klemme des ersten stationsseitigen Widerstandselements (RC) angeschlossen sind und die Phasenschwankungen zwischen der ersten und der zweiten Wechselspannung verarbeiten können, und
wobei der tragbare Gegenstand Folgendes umfasst:
- eine elektronische Schaltung (3), die ein erstes gegenstandsseitiges induktives Element (L30) und ein erstes gegenstandsseitiges Kondensatorelement (C30) umfasst, wobei die Schaltung (3) zwischen einem inaktiven und einem aktiven Zustand umschaltbar ist, in dem sie mit dem ersten stationsseitigen induktiven Element (L1) einen Resonanzkreis bildet,
- gegenstandsseitige Verarbeitungseinrichtung(en) (5), welche die elektronische Schaltung (3) in Abhängigkeit von den zur Station zu übertragenden Daten umschalten können, wobei es die durch diese Umschaltvorgänge induzierte Phasenschwankung zwischen der ersten und der zweiten Wechselspannung den stationsseitigen Verarbeitungseinrichtungen ermöglicht, die Daten daraus abzuleiten,
wobei die Anlage
**dadurch gekennzeichnet**
**ist, dass** sie stationsseitig ferner Folgendes umfasst:
- einen zweiten Generator (G2) für ein drittes Wechselspannungssignal mit einer zweiten ausgewählten Frequenz (F2), die zu der ersten Frequenz (F1) unterschiedlich ist,
- ein zweites stationsseitiges induktives Element (L2), das unabhängig vom ersten stationsseitigen induktiven Element (L1) an den zweiten Generator (G2) angeschlossen und dazu ausgelegt ist, ein vorbestimmtes Magnetfeld (CM2) zu erzeugen, und
dass sie darüber hinaus am tragbaren Gegenstand noch Folgendes umfasst:
- ein zweites gegenstandsseitiges induktives Element (L4), das vom ersten gegenstandsseitigen induktiven Element (L30) unabhängig ist,
- ein zweites gegenstandsseitiges Kondensatorelement (C4), das an die Klemmen des zweiten gegenstandsseitigen induktiven Elements (L4) angeschlossen ist, wobei das zweite gegenstandsseitige induktive Element (L4) einen auf das zweite stationsseitige induktive Element (L2) abgestimmten Regelkreis bilden kann, um an den Klemmen des zweiten gegenstandsseitigen induktiven Elements (L4) eine Versorgungswechselspannung zu erzeugen, welche beim Vorhandensein des durch das zweite stationsseitige induktive Element (L2) hervorgerufenen Magnetfelds (L2) induziert wird, und
dass die Station darüber hinaus noch eine Filterschaltung (DF) des Dipol-Typs umfasst, die zwischen einer der Umhüllungen des ersten stationsseitigen Kondensatorelements (C1) und einer der Klemmen des ersten stationsseitigen induktiven Elements (L1) zwischengeschaltet ist, wobei die Filterschaltung dazu ausgelegt ist, sich gegenüber der ersten Frequenz (F1) wie ein induktiver Widerstand und gegenüber der zweiten Frequenz (F2) wie ein starker Scheinwiderstand zu verhalten.

2. Anlage nach Anspruch 1,
**dadurch gekennzeichnet, dass**
die Filterschaltung (DF) ein induktives Element (LF) und ein Kondensatorelement (CF) umfasst, die parallelgeschaltet und zwischen dem ersten Kondensatorelement und dem ersten induktiven Element (C1 und L1) der Station angeordnet sind.

3. Anlage nach Anspruch 1 oder 2,
**dadurch gekennzeichnet, dass**
das erste und das zweite stationsseitige induktive Element (L1 und L2) im Wesentlichen dieselben geometrischen Abmessungen aufweisen und übereinander liegend angeordnet sind.

4. Anlage nach einem der vorhergehenden Ansprüche,
**dadurch gekennzeichnet, dass**
das zweite stationsseitige induktive Element (L2) eine Windung umfasst.

5. Anlage nach Anspruch 4,
**dadurch gekennzeichnet, dass**
das erste stationsseitige induktive Element (L1) in der Größenordnung von drei nebeneinander liegende Windungen umfasst.

6. Anlage nach einem der vorhergehenden Ansprüche,
**dadurch gekennzeichnet, dass**
der tragbare Gegenstand darüber hinaus noch Gleichrichtereinrichtungen (DR) umfasst, welche an die Klemmen des zweiten gegenstandsseitigen induktiven Elements (L4) angeschlossen und dazu ausgelegt sind, die induzierte Versorgungswechselspannung in eine Versorgungsgleichspannung gleichzurichten, die zur Versorgung der gegenstandsseitigen Verarbeitungseinrichtungen (5) bestimmt ist.

7. Anlage nach Anspruch 6,
**dadurch gekennzeichnet, dass**
der tragbare Gegenstand darüber hinaus noch eine Energieregelungsschaltung (RE) umfasst, die an den Ausgang der Gleichrichtereinrichtungen (RD) angeschlossen und dazu ausgelegt ist, die induzierte Versorgungsgleichspannung in Abhängigkeit von der Entfernung zwischen der Station und dem tragbaren Gegenstand zu regeln.

8. Anlage nach einem der vorhergehenden Ansprüche,
**dadurch gekennzeichnet, dass**
der zweite Generator (G2) ein Stromgenerator ist.

9. Anlage nach Anspruch 1,
**dadurch gekennzeichnet, dass**
der tragbare Gegenstand darüber hinaus noch Taktrückgewinnungseinrichtungen (RH) umfasst, die an die Klemmen des zweiten gegenstandsseitigen induktiven Elements (L4) angeschlossen und dazu ausgelegt sind, ein Taktsignal ausgehend von der induzierten Versorgungswechselspannung rückzugewinnen.

10. Anlage nach Anspruch 7,
**dadurch gekennzeichnet, dass**
der tragbare Gegenstand darüber hinaus noch Teilereinrichtungen (DIV) umfasst, die an den Ausgang der Rückgewinnungseinrichtungen angeschlossen und dazu ausgelegt sind, die Frequenz des auf diese Weise rückgewonnenen Taktsignals in ein Teilvielfaches aufzuteilen, das ausgewählt ist, um die gegenstandsseitigen Verarbeitungseinrichtungen zu takten.

11. Anlage nach Anspruch 1,
**dadurch gekennzeichnet, dass**
die Station darüber hinaus noch Verstärkereinrichtungen (AMP) umfasst, die dazu ausgelegt sind, das dritte, vom zweiten Generator (G2) abgegebene, Versorgungswechselspannungssignal zu verstärken.

12. Anlage nach einem der vorhergehenden Ansprüche,
**dadurch gekennzeichnet, dass**
das zweite gegenstandsseitige induktive Element (L4) n Windungen umfasst, wobei n eine ganze Zahl in der Größenordnung von 4 ist.

13. Anlage nach einem der vorhergehenden Ansprüche,
**dadurch gekennzeichnet, dass**
das erste und das zweite gegenstandsseitige induktive Element (L30 und L4) in einem vorbestimmten geometrischen Verhältnis zueinander angeordnet sind, das dazu bestimmt ist, radioelektrische Störungen zu begrenzen.

14. Anlage nach einem der vorhergehenden Ansprüche,
**dadurch gekennzeichnet, dass**
der tragbare Gegenstand von der Art einer berührungslosen passiven oder analogen Speicherkarte ist.

15. Anlage nach einem der Ansprüche 1 bis 13,
**dadurch gekennzeichnet, dass**
der tragbare Gegenstand von der Art eines elektronischen oder analogen Ansteckers ist.

16. Station nach einem der Ansprüche 1 bis 15.

## Claims

1. Installation for the exchange of information by electromagnetic coupling between a portable object and a station, wherein said station comprises:
- a first generator (G1) of a first alternating voltage (VEX) having a first chosen frequency (F1),
- a first station resistive element (RC) having a first terminal connected to the first generator (G1) and a second terminal,
- a series arrangement connected to the second terminal and having at least one first station inductive element (L1), a first station capacitive element (C1) and a second station resistive element (R1), said arrangement being able to generate at its terminals a second alternating voltage (VEY),
- station processing means connected to the first and second terminals of the first station resistive element (RC) and able to process phase variations between the first and second alternating voltages and
wherein said portable object comprises:
- an electronic circuit (3) comprising a first object inductive element (L30) and a first object capacitive element (C30), said circuit (3) being switchable between an inactive state and an active state in which it forms a resonant circuit with the first station inductive element (L1),
- object processing means (5) able to switch the electronic circuit (3) as a function of information to be transmitted to the station, the phase variation between the first and second alternating voltages induced by said switching operations permitting the station processing means to deduce said information therefrom,
- said installation being **characterized in that** it also comprises on the station:
- a second generator (G2) of a third alternating signal of a second chosen frequency (F2), different from the first frequency (F1),
- a second station inductive element (L2) connected to the second generator (G2), independent of the first station inductive element (L1) and able to produce a predetermined magnetic field (CM2) and
**in that** it also comprises on the portable object:
- a second object inductive element (L4), independent of the first object inductive element (L30),
- a second object capacitive element (C4) connected to the terminals of the second object inductive element (L4), which is able to form a tuned loop with the second station inductive element (L2) in order to generate at the terminals of said second object inductive element (L4) an alternating supply voltage induced in the presence of the magnetic field (CM2) produced by the second station inductive element (L2) and
**in that** the station also comprises a dipole-type filtering circuit (DF) placed between one of the capacitor plates of the first station capacitive element (C1) and one of the terminals of the first station inductive element (L1), said filtering circuit behaving like an inductance at the first frequency (F1) and like a high value impedance at the second frequency (F2).

2. Installation according to claim 1, **characterized in that** the filtering circuit (DF) comprises an inductive element (LF) and a capacitive element (CF), connected in parallel and placed between the first capacitive and inductive elements (C1, L1) of the station.

3. Installation according to claim 1 or 2, **characterized in that** the first and second station inductive elements (L1, L2) have substantially the same geometrical dimensions and are mutually superimposed.

4. Installation according to one of the preceding claims, **characterized in that** the second station inductive element (L2) comprises a coil.

5. Installation according to claim 4, **characterized in that** the first station inductive element (L1) comprises approximately three close wound coils.

6. Installation according to one of the preceding claims, **characterized in that** the portable object also comprises rectifying means (DR) connected to the terminals of the second object inductive element (L4) and able to rectify the alternating supply voltage induced to a direct supply voltage for supplying object processing means (5).

7. Installation according to claim 6, **characterized in that** the portable object also comprises an energy regulating circuit (RE) connected to the output of the rectifying means (RD) and able to regulate the direct supply voltage induced as a function of the distance between the station and the portable object.

8. Installation according to one of the preceding claims, **characterized in that** the second generator (G2) is a current generator.

9. Installation according to claim 1, **characterized in that** the portable object also comprises clock recovery means (RH) connected to the terminals of the second object inductive element (L4) and able to recover a clock signal from the alternating supply voltage induced.

10. Installation according to claim 7, **characterized in that** the portable object also comprises divider means (DIV) connected to the output of the recovery means and able to divide the frequency of the thus recovered clock signal into a submultiple for timing the object processing means.

11. Installation according to claim 1, **characterized in that** the station also comprises amplifier means (AMP) for amplifying the third alternating supply signal from the second generator (G2).

12. Installation according to one of the preceding claims, **characterized in that** the second object inductive element (L4) comprises n coils with n being an integer of approximately 4.

13. Installation according to one of the preceding claims, **characterized in that** the first and second object inductive elements (L30, L4) are mutually arranged in accordance with a predetermined geometrical relationship for limiting radio interference.

14. Installation according to one of the preceding claims, **characterized in that** the portable object is of the smart card type without a passive or similar contact.

15. Installation according to one of the claims 1 to 13, **characterized in that** the portable object is of the electronic label or a similar type.

16. Station according to one of the claims 1 to 15.
